# EUROPÄISCHE PATENTSCHRIFT

(11) **EP 1 524 174 B1**
(45) Veröffentlichungstag und Bekanntmachung des Hinweises auf die Patenterteilung: **06.12.2006**
(21) Anmeldenummer: 04024504.5
(22) Anmeldetag: 14.10.2004
(51) Int. Cl.: B62D 5/065, B62D 6/02

(54) **Elektrohydraulische Servolenkung**
Electro-hydraulic power steering
Direction assistée électrohydraulique

(30) Priorität: 15.10.2003 DE 10347779
(43) Veröffentlichungstag der Anmeldung: 20.04.2005
(73) Patentinhaber: ZF Lenksysteme GmbH, 73527 Schwäbisch Gmünd (DE)
(72) Erfinder: Hudelmaier, Gebhard, 73563 Mögglingen (DE); Wahl, Gernot, 73529 Schwäbisch Gmünd (DE); Staudenmaier, Claus, 73079 Süssen (DE); Widmaier, Holger, 73432 Aalen (DE)

(56) Entgegenhaltungen:
- EP-A- 0 543 419
- EP-A- 0 791 523
- DE-A1- 3 424 826
- GB-A- 2 122 150
- PATENT ABSTRACTS OF JAPAN Bd. 008, Nr. 096 (M-294), 4. Mai 1984 (1984-05-04) & JP 59 011969 A (TOUKAI TEII AARU DABURIYUU KK), 21. Januar 1984 (1984-01-21)

## Beschreibung

Die Erfindung betrifft eine elektrohydraulische Servolenkung für ein Fahrzeug nach dem Oberbegriff des Anspruchs 1.

Die EP 0791 523 A2 beschreibt eine elektrohydraulische Servolenkung mit einer adaptiven Regelung der Drehzahl eines Elektromotors einer Druckversorgungseinheit. Die Druckversorgungseinheit besteht aus einer Hydropumpe zur Förderung von Druckmittel für einen Servozylinder der elektrohydraulischen Lenkung. Die Hydropumpe wird von einem Elektromotor angetrieben, dessen Drehzahl von einer Steuer- und/oder Regeleinrichtung in Abhängigkeit von Stellsignalen von Sensoren geregelt wird. Zu diesem Zweck messen Sensoren ausgangsseitig der Hydropumpe den Druckmittelstrom, die Volumenstromschwankungen des Druckmittelstromes am Ausgang des Servozylinders, die Druckmittelschwankungen zwischen der Hydropumpe und einem Lenkventil und die Stromaufnahme des Elektromotors. Auf diese Weise ist der Energieverbrauch der elektrohydraulischen Servolenkung minimierbar.

Die elektrohydraulische Servolenkung und deren Regelung ist aufwändig und kostenseitig nicht optimiert.

Eine weitere elektrohydraulische Servolenkung ist auch durch die GB 2122150 bekannt.

Der Erfindung liegt die Aufgabe zugrunde, eine elektrohydraulische Servolenkung zu schaffen, die bei einfachem Aufbau in Bezug auf die Lärmentwicklung und den Energieverbrauch verbessert ist.

Die Aufgabe wird mit einer elektrohydraulischen Servolenkung mit den Merkmalen des Anspruchs 1 gelöst.

Dadurch dass die elektrohydraulische Servolenkung eine fahrgeschwindigkeitsabhängige Regelung der Drehzahl des Elektromotors der Hydropumpe vorsieht, ist grundsätzlich die Drehzahl des Elektromotors und somit die Lärmemission und der Energieverbrauch der Druckversorgungseinheit aus Hydropumpe und Elektromotor beim Stillstand oder bei niedriger Fahrgeschwindigkeit des Fahrzeugs geringer als bei höherer Fahrgeschwindigkeit. Die Fahrgeräusche des Fahrzeugs überlagern bei höherer Fahrgeschwindigkeit die Lärmabstrahlung der Druckversorgungseinheit der elektrohydraulischen Servolenkung.

Die Drehzahl des Elektromotors wird nach Maßgabe eines Stellsignals eines Fahrgeschwindigkeitssensors von einer Steuer- und/oder Regelungseinrichtung für den Elektromotor nicht proportional variiert, d.h. bei Stillstand oder geringer Fahrgeschwindigkeit des Fahrzeugs nimmt die Drehzahl des Elektromotors einen Wert ein, der sicherstellt, dass auch unter Berücksichtigung von Schlupfverlusten in der Hydropumpe, von Temperatureinflüssen des Druckmittels und der Hysterese in der elektrohydraulischen Servolenkung ein ausreichender Druckmittelvolumenstrom zur Verfügung steht um die bei Stillstand oder langsamer Fahrt des Fahrzeugs üblichen Lenkbewegungen eines Fahrers des Fahrzeugs mit einem Servomotormoment zu unterstützen oder ganz in eine Verschwenkung eines oder mehrerer lenkbaren Räder des Fahrzeugs umzusetzen.

Bevorzugte Ausführungen ergeben sich aus den Unteransprüchen.

Es ist zweckmäßig, die Drehzahl des Elektromotors in einem Fahrgeschwindigkeitsbereich vom Stillstand des Fahrzeugs bis zum Erreichen einer ersten, vergleichsweise geringen Fahrgeschwindigkeit, die der Steuer- und/oder Regeleinrichtung des Elektromotors vorgebbar ist, konstant zu halten. Nach Überschreiten einer zweiten, ebenfalls vorgebbaren Fahrgeschwindigkeit des Fahrzeugs nimmt die Drehzahl des Elektromotors eine im Vergleich zu der ersten Drehzahl erhöhte , zweite Drehzahl ein. Diese zweite Drehzahl kann variabel, bevorzugt proportional zu der Fahrgeschwindigkeit des Fahrzeugs sein. Es kann auch zweckmäßig sein diese zweite Drehzahl des Elektromotors etwa konstant einzustellen um eine besonders kostengünstige elektrohydraulische Servolenkung darzustellen.

Es kann auch zweckmäßig sein, eine Verzögerung des Schaltvorganges von der ersten Drehzahl auf die zweite Drehzahl oder einen zweiten Drehzahlbereich des Elektromotors vorzusehen, indem die zweite vorgebbare Fahrgeschwindigkeit, ab der die zweite Drehzahl oder der zweite Drehzahlbereich von dem Elektromotor eingenommen wird, von der ersten vorgebbaren Fahrgeschwindigkeit geringfügig verschieden, also höher gewählt ist.

In einer besonders bevorzugten Ausführungsform der elektrohydraulischen Servolenkung ist die erste vorgebbare Fahrgeschwindigkeit etwa 10 km/h und die zweite vorgebbare Fahrgeschwindigkeit etwa 15 km/h. Der Elektromotor der Druckversorgungseinheit ist bevorzugt pulsweitenmoduliert betrieben.

Die Erfindung wird nun anhand von einem Ausführungsbeispiel und anhand der beiliegenden Zeichnungen, die folgende Darstellungen wiedergeben, beschrieben.
- Fig. 1: zeigt eine schematische Darstellung einer elektrohydraulischen Servolenkung für ein Fahrzeug,
- Fig. 2: zeigt die Drehzahl eines Elektromotors der Druckversorgungseinheit aufgetragen über der Fahrgeschwindigkeit mit variabler, zweiter Drehzahl,
- Fig. 2a: zeigt einen weiteren Drehzahlverlauf eines Elektromotors der Druckversorgungseinheit,
- Fig. 2b: zeigt einen weiteren Drehzahlverlauf eines Elektromotors der Druckversorgungseinheit mit streng monoton wachsender, zweiter Drehzahl,
- Fig. 3a: zeigt einen weiteren Drehzahlverlauf eines Elektromotors mit etwa konstanter, zweiter Drehzahl,
- Fig. 3b: zeigt einen weiteren Drehzahlverlauf eines Elektromotors mit etwa konstanter, zweiter Drehzahl.

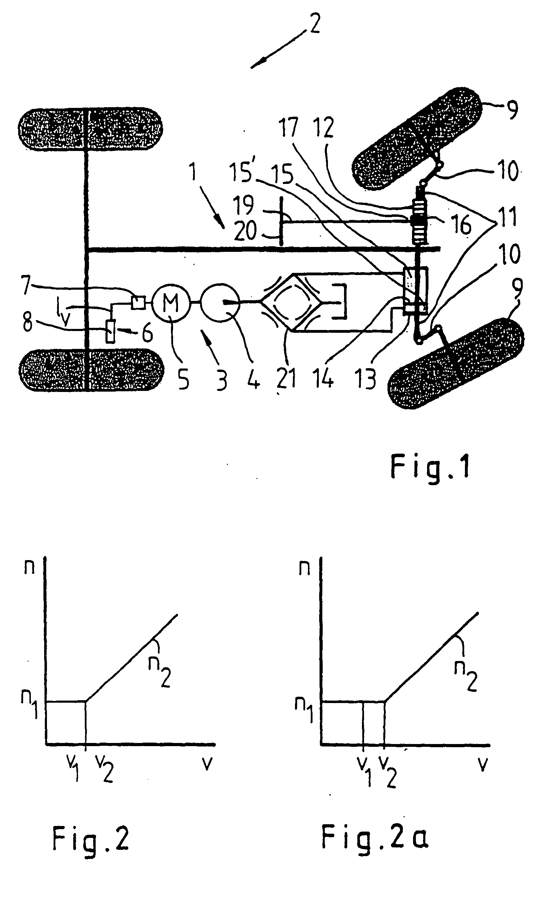

In Figur 1 sind schematisch wesentliche Komponenten einer elektrohydraulischen Servolenkung 1 für ein Fahrzeug 2 dargestellt. Die elektrohydraulische Servolenkung 1 dient zur Veränderung eines Lenkwinkels lenkbarer Räder 9 des Fahrzeugs 2. Die lenkbaren Räder 9 sind in an sich bekannter Weise mit ihren Radlenkhebeln 10 über gelenkig mit diesen verbundenen Spurstangen 11 und einer Zahnstange 12 verbunden. Die gezeigte Servolenkung 1 stellt eine Zahnstangen-Hydrolenkung mit Seitenabtrieb dar. Die Zahnstange 12 ist durch einen Servozylinder 13 axial geführt, dessen durch einen Kolben 14 getrennte Arbeitsräume 15,15' von Druckmittel einer Druckmittelversorgungseinheit 3 der elektrohydraulischen Servolenkung 1 beaufschlagt werden. Auf der Zahnstange 12 kämmt ein drehfest am axialen Ende 17 einer Lenkwelle 18 festgelegtes Ritzel 16. Das andere axiale Ende 19 der Lenkwelle 18 ist drehfest mit einer Lenkhandhabe 20 verbunden. Die Zahnstange 12 und der Servozylinder 13 wirken additiv auf die Spurstangen 11 und die Radlenkhebel 10.

Die Druckmittelversorgungseinheit 3 ist aus einem Elektromotor 5, der von einer Steuer- und/oder Regeleinrichtung 7 drehzahlgesteuert wird und eine Hydropumpe 4 antreibt, gebildet. Die Hydropumpe 4 fördert Druckmittel an ein Lenkventil 21, wobei ein Drehschieber des Lenkventils 21 von der Lenkwelle 18 in dem Lenkventil 21 verdreht wird und den Arbeitsräumen 15,15' des Servozylinders 13 Druckmittel zumisst.

Um den Energieverbrauch der Druckversorgungseinheit 3 zu minimieren und die Lärmemission der Druckversorgungseinheit 3 zu minimieren, ist vorgesehen, die Drehzahl n des Elektromotors 5 im Stillstand und bis zum Erreichen einer ersten, vorgebbaren Fahrgeschwindigkeit v₁ des Fahrzeugs 2 nicht proportional zu der Fahrgeschwindigkeit v zu steigern, sondern etwa konstant eine Drehzahl n₁ durch die Steuer- und/oder Regeleinrichtung 7 vorzugeben. Die Drehzahl n des Elektromotors 5 wird demnach fahrgeschwindigkeitsabhängig, aber nicht proportional zu der Fahrgeschwindigkeit v des Fahrzeugs 2 geregelt.

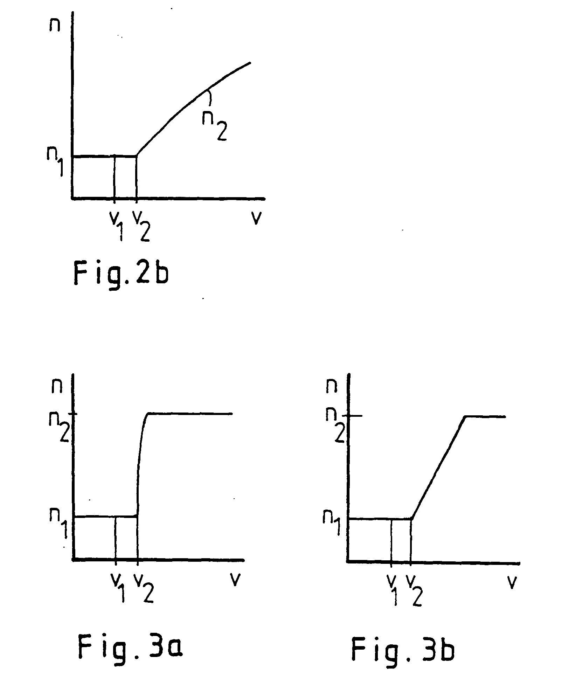

Die Drehzahl n₁ des Elektromotors 5 berücksichtigt die erforderliche Lenkleistung in dem Fahrgeschwindigkeitsbereich zwischen 0 km/h und v₁ und zudem die Verlustleistung der elektrohydraulischen Servolenkung 1, wobei ein Fördervolumenstrom der Hydropumpe 4 erzielt wird, der eine hohe Lenkpräzision ohne Inkaufnahme einer unkomfortablen Ansprechschwelle der Servolenkung ermöglicht (vgl. Fig. 2 bis 3a). Die Drehzahl n₁ des Elektromotors 5 bewirkt eine geringe Lärmemission solange das Fahrzeug 2 im Stillstand ist oder sich mit vergleichsweise geringer Fahrgeschwindigkeit kleiner oder gleich v₁ und somit geringen Abroll- und Motorgeräuschen bewegt. Der Fahrkomfort wird dadurch deutlich verbessert.

Wie die Figuren 2 bis 3a zeigen, wird die Drehzahl n des Elektromotors 5 bei Überschreiten einer vorwählbaren, zweiten Fahrgeschwindigkeit v₂ des Fahrzeugs 2 auf eine zweite, höhere Drehzahl n₂ gesteigert. Die Messung der Fahrgeschwindigkeit v des Fahrzeugs 2 erfolgt mittels ein oder mehrerer Sensoren 6, die mit unterschiedlichen Funktionsprinzipien die Fahrgeschwindigkeit v des Fahrzeugs 2 messen und als Fahrgeschwindigkeitssensoren 8 ausgebildet sind. Die Drehzahländerung des Elektromotors 5 wird nach Maßgabe eines Stellsignals lᵥ Des Sensors 8 durch die Steuer- und/oder Regeleinrichtung 7 durchgeführt. Die von dem Elektromotor 5 eingenommene, zweite, höhere Drehzahl n₂ kann in Abhängigkeit von der Fahrgeschwindigkeit v variabel (vgl. Fig. 2, 2a, 2b) oder konstant (vgl. Fig. 3a, 3b) eingestellt werden.

Wie die Figuren 2 und 2a zeigen, kann es zweckmäßig sein, eine lineare Abhängigkeit der Drehzahl n₂ von der Fahrgeschwindigkeit v vorzusehen. Es kann auch zweckmäßig sein, wie die Fig. 2b zeigt, den Drehzahlanstieg bei zunehmender Fahrgeschwindigkeit v streng monoton wachsend vorzusehen. Die Steigerung der Drehzahl n des Elektromotors 5 kann bei zunehmender Fahrgeschwindigkeit v verzögert erfolgen, indem die vorgebbare, zweite Fahrgeschwindigkeit v₂ geringfügig höher gewählt wird, als die erste Fahrgeschwindigkeit v₁. In Fig. 2a, 2b, 3a und 3b ist dies in Ausführungsbeispielen gezeigt, wobei v₁ etwa 10 km/h und v₂ etwa 15 km/h beträgt.

### BEZUGSZEICHENLISTE EM 035d

| | | | |
|---|---|---|---|
| 1 | Elektrohydraulische Servolenkung | 26 | |
| 2 | Fahrzeug | 27 | |
| 3 | Druckversorgungseinheit | 28 | |
| 4 | Hydropumpe | 29 | |
| 5 | Elektromotor | 30 | |
| 6 | Sensor | 31 | |
| 7 | Steuer- und/oder Regeleinrichtung | 32 | |
| 8 | Sensor z. Fahrgeschwindigkeitsm. | 33 | |
| 9 | Rad, lenkbar | 34 | |
| 10 | Radlenkhebel | 35 | |
| 11 | Spurstange | 36 | |
| 12 | Zahnstange | 37 | |
| 13 | Servozylinder | 38 | |
| 14 | Kolben | 39 | |
| 15,15' | Arbeitsraum | 40 | |
| 16 | Ritzel | 41 | |
| 17 | Ende, v. 18 | 42 | |
| 18 | Lenkwelle | 43 | |
| 19 | Ende, v. 18 | 44 | |
| 20 | Lenkhandhabe | 45 | |
| 21 | Lenkventil | 46 | |
| 22 | | 47 | |
| 23 | | 48 | |
| 24 | | 49 | |
| 25 | | 50 | |
| | | | |
| | | n,n₁,n₂ | Drehzahl |
| lᵥ | Stellsignal | | |
| V,V₁,V₂ | Fahrgeschwindigkeit | | |
| | | | |

## Patentansprüche

1. Elektrohydraulische Servolenkung für ein Fahrzeug (2), mit einer Druckversorgungseinheit (3) bestehend aus einer Hydropumpe (4) die von einem Elektromotor (5) angetrieben ist, dessen Drehzahl (n) nach Maßgabe eines Stellsignals (Iᵥ) eines Sensors (6) durch eine Steuer- und/oder Regeleinrichtung (7) bestimmt ist, wobei der Sensor (6) ein Sensor (8) zur Messung der Fahrgeschwindigkeit des Fahrzeugs (2) ist und die Drehzahl (n) des Elektromotors (5) nach Maßgabe des Stellsignals (Iᵥ) von der Steuer- und/oder Regeleinrichtung (7) nicht proportional zu der Fahrgeschwindigkeit (v) verändert wird, **gekennzeichnet durch** folgende Merkmale:
- die Drehzahl (n) des Elektromotors (5) ist vom Stillstand des Fahrzeugs (2) bis zum Erreichen einer ersten vorgebbaren Fahrgeschwindigkeit (v₁) des Fahrzeugs (2) eine erste, etwa konstante Drehzahl (n₁),
- bei Überschreiten einer zweiten, vorgebbaren Fahrgeschwindigkeit (v₂) des Fahrzeugs (2) ist die Drehzahl (n) des Elektromotors (5) eine zweite, gegenüber der ersten Drehzahl (n₁) erhöhte Drehzahl (n₂).

2. Elektrohydraulische Servolenkung nach Anspruch 1, **dadurch gekennzeichnet, dass** die zweite Drehzahl (n₂) des Elektromotors (5) variabel ist.

3. Elektrohydraulische Servolenkung nach Anspruch 2, **dadurch gekennzeichnet, dass** die zweite Drehzahl (n₂) des Elektromotors (5) proportional zu der Fahrgeschwindigkeit (v₂) des Fahrzeugs (2) ist.

4. Elektrohydraulische Servolenkung nach Anspruch 1, **dadurch gekennzeichnet, dass** die zweite Drehzahl (n₂) des Elektromotors (5) konstant ist.

5. Elektrohydraulische Servolenkung nach einem der Ansprüche 1 bis 4, **dadurch gekennzeichnet, dass** die zweite, vorgebbare Fahrgeschwindigkeit (v₂) geringfügig höher als die erste vorgebbare Fahrgeschwindigkeit (v₁) ist.

6. Elektrohydraulische Servolenkung nach einem der Ansprüche 1 bis 5, **dadurch gekennzeichnet, dass** die erste, vorgebbare Fahrgeschwindigkeit (v₁) etwa 10 km/h ist.

7. Elektrohydraulische Servolenkung nach einem der Ansprüche 1 bis 6, **dadurch gekennzeichnet, dass** die zweite, vorgebbare Fahrgeschwindigkeit (v₂) etwa 15 km/h ist.

8. Elektrohydraulische Servolenkung nach einem der Ansprüche 1 bis 7, **dadurch gekennzeichnet, dass** der Elektromotor (5) von der Steuer- und/oder Regeleinrichtung (7) pulsweitenmoduliert ist.

## Claims

1. Electrohydraulic power steering system for a vehicle (2), having a pressure supply unit (3) comprising a hydraulic pump (4) which is driven by an electric motor (5), the rotational speed (n) of which is determined according to an actuating signal (lᵥ) of a sensor (6) by a control and/or regulating device (7), the sensor (6) being a sensor (8) for measuring the driving speed of the vehicle (2), and the rotational speed (n) of the electric motor (5) being changed according to the actuating signal (lᵥ) by the control and/or regulating device (7) in a manner which is not proportional to the driving speed (v), **characterized by** the following features:
- the rotational speed (n) of the electric motor (5) is a first, approximately constant rotational speed (n₁) from the standstill of the vehicle (2) until a first predefinable driving speed (v₁) of the vehicle (2) has been reached,
- when a second, predefinable driving speed (v₂) of the vehicle (2) has been exceeded, the rotational speed (n) of the electric motor (5) is a second rotational speed (n₂) which is increased with respect to the first rotational speed (n₁).

2. Electrohydraulic power steering system according to Claim 1, **characterized in that** the second rotational speed (n₂) of the electric motor (5) is variable.

3. Electrohydraulic power steering system according to Claim 2, **characterized in that** the second rotational speed (n₂) of the electric motor (5) is proportional to the driving speed (v₂) of the vehicle (2).

4. Electrohydraulic power steering system according to Claim 1, **characterized in that** the second rotational speed (n₂) of the electric motor (5) is constant.

5. Electrohydraulic power steering system according to one of Claims 1 to 4, **characterized in that** the second, predefinable driving speed (v₂) is slightly higher than the first, predefinable driving speed (v₁).

6. Electrohydraulic power steering system according to one of Claims 1 to 5, **characterized in that** the first, predefinable driving speed (v₁) is approximately 10 km/h.

7. Electrohydraulic power steering system according to one of Claims 1 to 6, **characterized in that** the second, predefinable driving speed (v₂) is approximately 15 km/h.

8. Electrohydraulic power steering system according to one of Claims 1 to 7, **characterized in that** the electric motor (5) is pulse-width modulated by the control and/or regulating device (7).

## Revendications

1. Direction assistée électrohydraulique pour un véhicule (2), comprenant une unité d'alimentation en pression (3) composée d'une pompe hydraulique (4) qui est entraînée par un moteur électrique (5) dont la vitesse de rotation (n) est déterminée par un dispositif de commande et/ou de régulation (7) en fonction des indications d'un signal de commande (lᵥ) d'un capteur (6), le capteur (6) étant un capteur (8) pour mesurer la vitesse de déplacement du véhicule (2) et la vitesse de rotation (n) du moteur électrique (5) étant modifiée de manière non proportionnelle à la vitesse de déplacement (v) en fonction des indications d'un signal de commande (Iᵥ) d'un dispositif de commande et/ou de régulation (7), **caractérisée par** les caractéristiques suivantes :
- la vitesse de rotation (n) du moteur électrique (5) est une vitesse de rotation (n₁) approximativement constante entre l'arrêt du véhicule (2) et l'atteinte d'une première vitesse de déplacement prédéfinissable (v₁) du véhicule (2),
- lors du dépassement d'une deuxième vitesse de déplacement prédéfinissable (v₂) du véhicule (2), la vitesse de rotation (n) du moteur électrique (5) est une deuxième vitesse de rotation (n₂) accrue par rapport à la première vitesse de rotation (n₁).

2. Direction assistée électrohydraulique selon la revendication 1, **caractérisée en ce que** la deuxième vitesse de rotation (n₂) du moteur électrique (5) est variable.

3. Direction assistée électrohydraulique selon la revendication 2, **caractérisée en ce que** la deuxième vitesse de rotation (n₂) du moteur électrique (5) est proportionnelle à la vitesse de déplacement (v₂) du véhicule (2).

4. Direction assistée électrohydraulique selon la revendication 1, **caractérisée en ce que** la deuxième vitesse de rotation (n₂) du moteur électrique (5) est constante.

5. Direction assistée électrohydraulique selon l'une des revendications 1 à 4, **caractérisée en ce que** la deuxième vitesse de déplacement prédéfinissable (v₂) est légèrement supérieure à la première vitesse de déplacement prédéfinissable (v₁).

6. Direction assistée électrohydraulique selon l'une des revendications 1 à 5, **caractérisée en ce que** la première vitesse de déplacement prédéfinissable (v₁) est d'environ 10 km/h.

7. Direction assistée électrohydraulique selon l'une des revendications 1 à 6, **caractérisée en ce que** la deuxième vitesse de déplacement prédéfinissable (v₂) est d'environ 15 km/h.

8. Direction assistée électrohydraulique selon l'une des revendications 1 à 7, **caractérisée en ce que** le moteur électrique (5) est modulé en largeur d'impulsion par le dispositif de commande et/ou de régulation (7).
